# EUROPEAN PATENT SPECIFICATION

(11) **EP 1 118 797 B1**
(45) Date of publication and mention of the grant of the patent: **11.08.2004**
(21) Application number: 01101248.1
(22) Date of filing: 19.01.2001
(51) Int. Cl.: F16H 1/16

(54) **Motor reducer comprising a worm gear unit**
Getriebemotor mit Schneckenantrieb
Motoréducteur avec un engrenage à vis sans fin

(30) Priority: 21.01.2000 IT BO000005 U
(43) Date of publication of application: 25.07.2001
(73) Proprietor: Bonfiglioli Riduttori S.p.A., 40012 Calderara di Reno (IT)
(72) Inventor: Cognigni, Enzo, 40129 Bologna (IT)
(74) Representative: Eccetto, Mauro

(56) References cited:
- EP-A- 0 943 842
- EP-A- 0 947 729
- GB-A- 570 600
- US-A- 5 186 068

## Description

The present invention relates to a motor reducer comprising a worm-helical gear reducer.

As is known, two skew shafts can be rotated using a motor reducer comprising a worm-helical gear reducer and a drive unit.

The worm is fitted to one shaft supported on the reducer casing at both ends by means of respective bearings. The bearing at the power transmission end of the shaft is normally locked on one side by an outer cover screwed to the reducer casing, and on the other side by a retaining ring which should prevent axial displacement of the bearing.

More specifically, the outer ring of the bearing is locked on one side by the walls of a seat provided for the purpose on the casing, and on the other side by the outer cover screwed to the casing. Axial movement of the inner ring of the same bearing is prevented on one side by a shoulder on the worm shaft, and on the other side by a retaining ring fitted to the shaft.

In actual use, however, on account of the forces involved along the axis of the worm shaft - due, as is known, to the meshing of the helical teeth - motor reducers of the above type fail to ensure precise locking of the inner ring to the respective shaft. This is more noticeable as the power being transmitted increases, so that the inner ring of the bearing on the power transmission side of the reducer tends to move along the respective shaft axis. It has also been noted that, whereas the seats and shoulders housing the bearing are more than capable of withstanding the forces involved, the retaining ring offers very little resistance and at times is incapable of withstanding the stress to which it is subjected. This, as stated, is what causes axial displacement of the inner ring of the bearing, which may result in relative axial displacement of the worm shaft along its longitudinal axis of symmetry, thus impairing meshing of the worm and helical gear.

In order to solve the aforesaid problem a collar has been proposed to prevent one of the bearings from moving along the axis of the worm shaft. Such a collar is described in GB 570 600, which comprises the features mentioned in the preamble of claim 1, US-A-5 186 068 and EP-A-0 943 842. However, the collar provided in the prior art does not sufficiently withstand the stress to which it is subjected.

It is therefore an object of the present invention to eliminate the above drawback by providing a motor reducer according to claim 1.

One of the advantages of such a motor reducer lies in the bearing being locked more reliably to the worm shaft.

A number of non-limiting embodiments of the present invention will be described by way of example with reference to the accompanying drawings, in which:
Figure 1 shows a partly exploded assembly drawing of the motor reducer according to the present invention;
Figure 2 shows an enlargement of a detail K in Figure 1;
Figure 3 shows an enlargement of a combined collar and retaining ring forming part of the motor reducer according to the present invention.

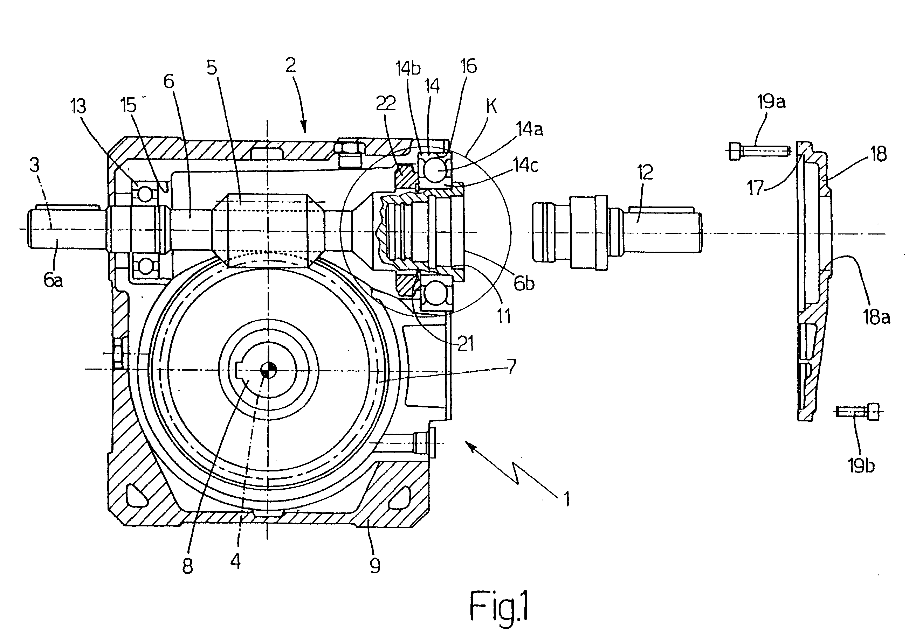

Number 1 in Figure 1 indicates as a whole a worm-helical gear motor reducer comprising a drive unit (not shown) and a reducer 2 for transmitting rotation between two perpendicular skew axes 3 and 4. Reducer 2 in turn comprises a worm 5 having a first shaft 6 coaxial with axis 3; and a helical gear 7 fitted to a second shaft 8 coaxial with axis 4. Worm 5 and helical gear 7 are substantially housed, together with respective shafts, 6, 8, in a casing 9. One end 6b of first shaft 6 is provided with a dead hole 11, which is engaged by a shaft 12 for connection to the drive unit (not shown). As can be seen, in use, shaft 12 and first shaft 6 of reducer 2 have the same longitudinal axis of symmetry 3.

Shaft 12 is advantageously fitted inside dead hole 11 by means of a splined coupling (not shown), or, as in a variation not shown, by means of a lobed coupling.

As shown in Figure 1, each end 6a, 6b of shaft 6 of worm 5 is supported by a respective bearing 13, 14. Bearing 13, which in this particular embodiment is a ball bearing, is located at the end 6a of shaft 6 connectable to any further user device (not shown) of motor reducer 1, and is housed in a substantially cylindrical seat 15 formed for the purpose in the inner walls of casing 9. Seat 15 is capable of effectively withstanding any stress along axis 3, and so practically eliminating axial displacement of bearing 13.

The same does not apply, on the other hand, to bearing 14, which, in the Figure 1 embodiment, is also a ball bearing, and the balls 14a of which are housed as usual inside seats formed in an outer ring 14b integral with casing 9, and an inner ring 14c integral with shaft 6.

More specifically, outer ring 14b is housed on one side inside a seat 16 formed in the inner walls of casing 9, and on the other side is retained by a retaining surface 17 formed inside a cover 18 fixed to casing 9 by screws 19a, 19b.

It should be pointed out that cover 18 has a hole 18a through which shaft 12 extends for rotation by the electric motor (not shown) of motor reducer 1.

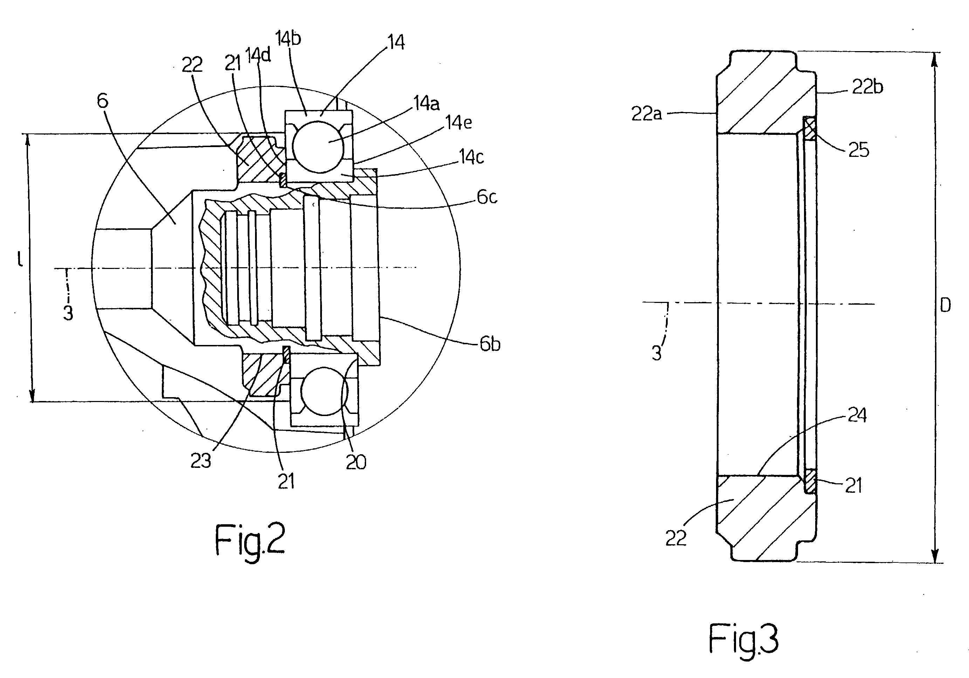

As shown in more detail in Figure 2, inner ring 14c of bearing 14 is fitted to shaft 6, rests against a shoulder 20 at end 6b of shaft 6, and, on the opposite side to end 6b, may be locked as usual by a retaining ring 21. That is, inner ring 14c of bearing 14 may be locked axially, in known manner, by shoulder 20 on one side and by retaining ring 21 on the other. In most cases, however, and particularly when the power transmitted by worm 5 to helical gear 7 is considerable, the retaining ring alone is not sufficient to effectively lock inner ring 14c to shaft 6 and prevent inner ring 14c from moving in the direction of axis 3.

It has therefore been thought to employ in inventive manner a metal collar 22 force fitted - possibly cold force fitted, possibly using an appropriate mechanical assembly device (not shown) - to a surface portion 23 of shaft 6.

Obviously, to prevent collar 22 from sliding on the inner walls of casing 9 as shaft 6 rotates, the outside diameter D of collar 22 must be less than the distance 1 (Figure 2) between the walls of casing 9.

As shown in more detail in Figure 3, collar 22 comprises a through hole 24, the surface of which is force fitted to portion 23 of shaft 6; and two annular lateral faces 22a, 22b. In actual use, face 22b rests against a lateral face 14d of inner ring 14c to prevent, as stated, displacement of bearing 14 in the direction of axis 3. On the face 22b side, an annular recess 25 may also be provided to at least partly house retaining ring 21.

In other words, bearing 14 is first fitted to shaft 6, so that a face 14e of inner ring 14c rests against shoulder 20 of shaft 6, and obviously locking inner ring 14c in known manner to shaft 6.

Retaining ring 21 is then fitted inside a seat 6c (Figure 2) provided for the purpose on shaft 6, and, finally, collar 22 is force fitted onto portion 23 of shaft 6, so that recess 25 at least partly houses retaining ring 21. In the assembled configuration, therefore, face 22b (Figure 3) of collar 22 rests against face 14d of inner ring 14c, and the surface of through hole 24 is force fitted, using the aforementioned mechanical assembly device, to the outer-surface portion 23 of shaft 6. Obviously, as regards locking bearing 14 to shaft 6, retaining ring 21 is optional.

## Claims

1. A motor reducer (1) comprising a drive unit and a worm-helical gear reducer (2), which in turn comprises a worm (5) fitted to a first shaft (6) having a respective first axis (3), and a helical gear (7) fitted to a second shaft (8) having a respective second axis (4); said first shaft (6) having a respective bearing (13, 14) at each end (6a, 6b) ; and the motor reducer (1) comprising at least a collar (22), which, during power transmission, prevents one of said bearings (13, 14) from moving along the first axis (3); motor reducer (1) **characterized in that** a retaining ring (21) is interposed between said collar (22) and said bearing (14) and is housed inside a seat (6c) on said first shaft (6).

2. A motor reducer (1) as claimed in Claim 1, wherein said collar (22) comprises a recess (25) for at least partly housing said retaining ring (21).

3. A motor reducer (1) as claimed in Claim 1, wherein the bearing (14) prevented by said collar (22) from moving along the first axis (3) is located on the side of the reducer (2) at which power is transmitted between an electric motor and said reducer (2).

4. A motor reducer (1) as claimed in any one of the foregoing Claims, wherein said collar (22) axially locks the inner ring (14c) of said bearing (14).

5. A motor reducer (1) as claimed in any one of the foregoing Claims, wherein said collar (22) is fitted to said first shaft (6) by means of a force fit.

6. A motor reducer (1) as claimed in Claim 5, wherein said force fit is a cold force fit.

## Patentansprüche

1. Getriebemotor (1) mit einer Antriebseinheit und einem schnecken-helikalen Getriebereduzierer (2), welcher wiederum eine Schnecke (5), die an einer ersten Welle (6) mit einer zugehörigen ersten Achse (3) befestigt ist und ein helikales Getriebe (7), welches an einer zweiten Welle (8) mit einer zugehörigen zweiten Achse (4) befestigt ist, umfasst; die erste Welle (6) weist ein zugehöriges Lager (13, 14) an jedem Ende (6a, 6b) auf; und der Getriebemotor (1) umfasst wenigstens einen Kragen (22), der während der Kraftübertragung verhindert, dass sich eines der Lager (13, 14) längs der ersten Achse (3) bewegt; welcher Getriebemotor (1) **dadurch gekennzeichnet ist, dass** ein Rückhaltering (14) zwischen dem Kragen (22) und dem Lager (14) angeordnet ist und in einem Sitz (6c) auf der ersten Welle (6) aufgenommen ist.

2. Getriebemotor (1) nach Anspruch 1, bei welchem der Kragen (22) eine Ausnehmung (25) zum wenigstens teilweisen Aufnehmen des Rückhalterings (21) aufweist.

3. Getriebemotor (1) nach Anspruch 1, bei welchem sich das Lager (14), das durch den Kragen (22) verhindert ist, sich längs der ersten Achse (3) zu bewegen, auf der Seite des Reduzierers (2), auf welcher die Kraft zwischen einem Elektromotor und dem Reduzierer (2) übertragen wird, befindet.

4. Getriebemotor (1) nach einem der vorhergehenden Ansprüche, bei welchem der Kragen (22) den inneren Ring (14c) des Lagers (14) axial blockiert.

5. Getriebemotor (1) nach einem der vorhergehenden Ansprüche, bei welchem der Kragen (22) mittels eines Kräftsitzes an der ersten Welle (6) befestigt ist.

6. Getriebemotor (1) nach Anspruch 5, bei welchem der Kraftsitz ein Kaltkraftsitz ist.

## Revendications

1. Réducteur de moteur (1) comprenant une unité de commande et un réducteur à engrenage à vis hélicoïdale sans fin (2), qui comprend à son tour une vis sans fin (5) ajustée à un premier arbre (6) ayant un premier axe respectif (3), et un engrenage hélicoïdal (7) ajusté à un second arbre (8) ayant un second axe respectif (4) ; ledit premier arbre (6) ayant un palier respectif (13, 14) à chaque extrémité (6a, 6b) ; et le réducteur de moteur (1) comprenant au moins un collet (22), qui, pendant la transmission de puissance, empêche un desdits paliers (13, 14) de se déplacer le long du premier axe (3) ; le réducteur de moteur (1) étant **caractérisé en ce qu'**une bague de retenue (21) est interposée entre ledit collet (22) et ledit palier (14) et est logée à l'intérieur d'un siège (6c) sur ledit premier arbre (6).

2. Réducteur de moteur (1) selon la revendication 1, dans lequel ledit collet (22) comprend une partie en retrait (25) pour loger au moins en partie ladite bague de retenue (21).

3. Réducteur de moteur (1) selon la revendication 1, dans lequel le palier (14) empêché par ledit collet (22) de se déplacer le long du premier axe (3) est situé sur le côté du réducteur (2) auquel la puissance est transmise entre un moteur électrique et ledit réducteur (2).

4. Réducteur de moteur (1) selon l'une quelconque des revendications précédentes, dans lequel ledit collet (22) verrouille de façon axiale la bague intérieure (14c) dudit palier (14).

5. Réducteur de moteur (1) selon l'une quelconque des revendications précédentes, dans lequel ledit collet (22) est ajusté audit premier arbre (6) au moyen d'un ajustement serré.

6. Réducteur de moteur (1) selon la revendication 5, dans lequel ledit ajustement serré est un ajustement serré à froid.
